# EUROPÄISCHE PATENTSCHRIFT

(11) **EP 1 463 076 B1**
(45) Veröffentlichungstag und Bekanntmachung des Hinweises auf die Patenterteilung: **03.11.2010**
(21) Anmeldenummer: 04006464.4
(22) Anmeldetag: 18.03.2004
(51) Int. Cl.: H01H 9/54

(54) **Verfahren zum Betreiben eines elektronisch-mechanischen Positionsschalters**
Method for operating an electronic-mechanical position switch
Procédé pour actionner un interrupteur de position électronique-mécanique

(30) Priorität: 27.03.2003 DE 10313721
(43) Veröffentlichungstag der Anmeldung: 29.09.2004
(73) Patentinhaber: Eaton Industries GmbH, 53115 Bonn (DE)
(72) Erfinder: Högener, Hans-Jürgen, 53859 Niederkassel (DE); Volberg, Jürgen, 53844 Troisdorf (DE); Wolff, Bernd, 53773 Hennef (DE); Völlmar, Guido, 51063 Köln (DE)
(74) Vertreter: Leadbetter, Benedict

(56) Entgegenhaltungen:
- DE-U1- 20 203 214
- US-A- 5 621 398
- US-A- 5 965 960
- US-A1- 2002 093 444

## Beschreibung

Die Erfindung betrifft ein Verfahren zum Betreiben eines elektronisch-mechanischen Positionsschalters nach dem Oberbegriff von Anspruch 1.

In der Produktinformation der Firma Klöckner-Moeller W 13-7364, 4/1996 "Überwachen und melden: zuverlässig und sicher, Positionsschalter AT" ist ein elektromechanischer Positionsschalter beschrieben. In einem Gehäuse sind mechanische Schaltkontakte, beispielsweise Paare oder Einzelkontakte von Öffnern und/oder Schließern angeordnet und ein längsverschieblicher Kuppenstößel zur unmittelbaren mechanischen Betätigung der Schaltkontakte gelagert. Um die Positionsschalter möglichst vielfältig einsetzen zu können, werden dem Kuppenstößel austauschbare Antriebsköpfe vorgesetzt. So kann auf das Gehäuse des Positionsschalters wahlweise ein Antriebskopf mit Schwenkhebel, Rollenhebel, Verstellrollenhebel oder Federstab befestigt werden.

Ein elektronisch-mechanischer Positionsschalter ist aus der Gebrauchsmusterschrift DE 202 03 214 U1 bekannt. In einem Gehäuse sind ein Betätigungsstößel, ein Potentiometer, ein Mikrocontroller und elektronische Schaltkontakte angeordnet. Der Betätigungsstößel ist mit dem Schleifer des Potentiometers gekoppelt. Bei Stößelbetätigung wird dem Mikrocontroller ein sich änderndes elektrisches Signal zugeführt, das beim Über- bzw. Unterschreiten eines programmierten Schwellenwertes eine Zustandsänderung der Schaltkontakte bewirkt. Die Schaltkontakte sind ausgangsseitig mit den Anschlussklemmen verbunden. Um den Umschaltpunkt des Positionsschalters einzustellen bzw. die Umschaltposition des Betätigungsstößels festzulegen, wird vorgeschlagen, über einen Programmieranschluss oder über Auswahlschalter den Schwellenwert zu programmieren oder aus einer im Mikrocontroller hinterlegten Anzahl vorgegebener Schwellenwerte auszuwählen. Derartige Ein- bzw. Umstellungen der Umschaltposition sind umständlich, da sie wenigstens einmal durch tatsächliches Anfahren des Betätigungsstößels bzw. des Antriebskopfes zu überprüfen ist. In Anbetracht der beschränkten Zuverlässigkeit für die Kontaktgabe des Schleifers des Potentiometers besteht eine nicht unerhebliche Unsicherheit für die Gültigkeit der Ausgangssignale der Schaltkontakte.

Der Erfindung liegt daher die Aufgabe zugrunde, das Einstellen und die Zuverlässigkeit eines elektronisch-mechanischen Positionsschalters zu verbessern.

Ausgehend von einem Verfahren der eingangs genannten Art wird die Aufgabe erfindungsgemäß durch die Merkmale des unabhängigen Anspruches gelöst, während den abhängigen Ansprüchen vorteilhafte Weiterbildungen der Erfindung zu entnehmen sind.

Zur erstmaligen Einstellung oder zur Neueinstellung des Umschaltpunktes wird der Betätigungsstößel unter betrieblichen Bedingungen in die gewünschte Umschaltposition gefahren. Durch Betätigen eines Quittiertasters, beispielsweise eines im Gehäuse des Positionsschalters angeordneten DIP-Schalters, wird das bei diese Position des Betätigungsstößels erfasste Schleiferpotential als neuer Schwellenwert eingelesen. Dieser Schwellenwert ist solange maßgeblich, bis bei Bedarf eine neue Umschaltposition festgelegt wird. Die Festlegung der Umschaltposition erfolgt in einfacher, schneller und sicherer Weise durch direktes Anfahren des Betätigungsstößels in der Maschine oder Anlage. Ein Nachjustieren ist nicht erforderlich. Der Positionsschalter kann zweckmäßigerweise vom Hersteller auf die Mitte des Verfahrweges des Betätigungsstößels voreingestellt sein. Durch die laufende zweimalige Erfassung des Schleiferpotentials mit jeweils entgegengesetzter Polung der Außenspannung an den Außenanschlüssen des Potentiometers und dem Vergleich der Summe der beiden Potentialwerte mit dem Wert des Außenpotentials selbst, wird ein sicheres Bewertungskriterium für die Gültigkeit des Schleiferpotentials geschaffen. Bei funktionstüchtigem Potentiometer ist die Summe der beiden Potentialwerte gleich oder ziemlich gleich dem Wert der Außenspannung. Ein wesentliches Abweichen dieser Summe vom Wert der Außenspannung lässt auf einen Defekt des Potentiometers schließen. Die Nichtbewertung des Schleiferpotentials verhindert ein möglicherweise folgenschweres Umschalten der Schaltkontakte.

Vorteilhafterweise wird die durch den Mikrocontroller über die Außenanschlüsse des Potentiometers gelegte Außenspannung durch das dem Mikrocontroller zugeführte Versorgungspotential und Bezugspotential gebildet, d.h., sie ist mit der Versorgungsspannung des Mikrocontrollers identisch.

Eine vorteilhafte Weiterbildung des Verfahrens besteht darin, erst nach Bestätigung einer wesentlichen Ungleichheit zwischen dem Summenwert und dem Wert des Außenpotentials durch mehrfacher Wiederholung der zweimaligen Erfassung des Schleiferpotentials und des nachfolgenden Vergleiches, eine Bewertung der Position des Betätigungsstößels zu unterlassen. Damit werden zufällige Störungen bei der Erfassung und Verarbeitung des Schleiferpotentials mit hoher Sicherheit übergangen. Als zweckmäßig hat sich eine bis zu viermalige Wiederholung des Vorganges erwiesen. Das Toleranzfenster für zulässige Abweichungen zwischen dem Summenwert und dem Außenpotential beträgt zweckmäßigerweise ±5 bis ±20% von demjenigen Wertebereich, der dem Gesamthub des Betätigungsstößels entspricht. Im Ergebnis einer trotz der vorgegebenen Anzahl von Wiederholungen verbliebenen Ungleichheit ist es von Vorteil, vom Mikrocontroller ein Fehlermeldesignal, beispielsweise zur Ansteuerung einer im Gehäuse angebrachten LED-Anzeige, auszugeben.

In Nachbildung des Verhaltens elektromechanischer Positionsschalter ist das Schleiferpotential gegenüber der Position des Betätigungsstößels mit einer Hysterese versehen. Damit wird verhindert, dass eine zufällige kleine Änderung der Position des Betätigungsstößels zum Umschalten des mindestens einen Schaltkontaktes führt. Zweckmäßig für die Praxis ist eine Hysterese von 10 % bezogen auf den Gesamthub des Betätigungsstößels. Die Hysterese wird vorteilhaft durch eine spielbehaftete mechanische Kopplung zwischen dem Betätigungsstößel und dem Schleifer des Potentiometers bewirkt.

Um die Zuverlässigkeit gegenüber kleiner Änderungen elektrischer Werte (zum Beispiel Änderungen der Versorgungsspannung) oder hinsichtlich von Störsignalen zu erhöhen, wird der aus dem Schleiferpotential gewonnene digitale Wert mit einer digitalen Hysterese beaufschlagt. Änderungen dieses digitalen Wertes führen erst dann zum Umschalten, wenn der Schwellenwert um mehr als die Breite der Hysterese über- bzw. unterschritten wird. Als zweckmäßig hat sich eine Hysterese von 2 % vom Wert der Außenspannung ergeben. Bei einer Auflösung des digitalisierten Wertes von 8 Bit, vorzugsweise mittels eines 8-Bit-A/D-Wandlers, ergibt sich damit eine Hysterese von 5 Digits.

Um eine Umschaltposition problemlos festlegen zu können, besteht eine vorteilhafte Weiterbildung des erfindungsgemäßen Verfahrens darin, dass programmmäßig geprüft wird, ob das digitalisierte Schleiferpotential während einer Mindestbetätigungsdauer des Quittungsschalters nicht außerhalb der digitalen Hysterese gelangt ist. Nur bei positivem Verlauf dieser Prüfung wird das digitalisierte Schleiferpotential als neuer Schwellenwert im Mikrocontroller gespeichert. Zweckmäßig ist eine Mindestbetätigungsdauer von 0,5 bis 1 s. Im Ergebnis der Übernahme einer neuen Umschaltposition ist es von Vorteil, vom Mikrocontroller ein Bestätigungssignal, beispielsweise zur Ansteuerung einer im Gehäuse angebrachten LED-Anzeige, auszugeben.

Weitere Einzelheiten und Vorteile der Erfindung ergeben sich aus dem folgenden, anhand von Figuren erläuterten Ausführungsbeispiel. Es zeigen
- Figur 1:: die Blockdarstellung eines nach dem erfindungsgemäßen Verfahren betriebenen elektronisch-mechanischen Positionsschalters;
- Figur 2:: ein Zeitdiagramm zur Erläutung der Arbeitsweise des Positionsschalters aus Fig. 1;
- Figur 3:: die Darstellung des erfindungsgemäßen Verfahrens in einem Flussdiagramm;
- Figur 4:: eine vereinfachte Einzeldarstellung aus Fig. 1.

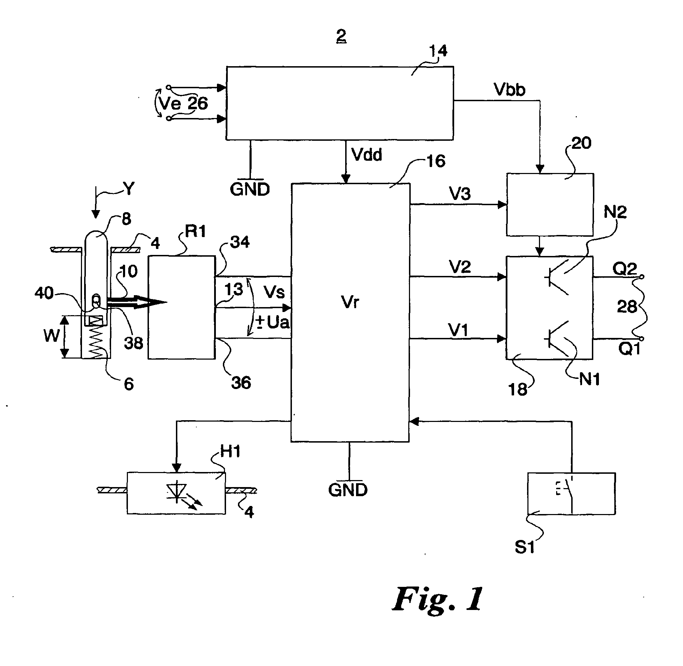

Nach Fig. 1 ist der elektronisch-mechanische Positionsschalter 2 in einem kastenförmigen Gehäuse 4, das allerdings nur rudimentär angedeutet ist, aufgebaut. Als mechanische Komponenten sind in dem Gehäuse 4 ein mit oder entgegen der Federkraft einer Druckfeder 6 in Betätigungsrichtung Y verschiebbarer Betätigungsstößel 8 sowie ein mit diesem gekoppelter Schleifer 10 eines Potentiometers R1 gelagert. Im Gehäuse 4 sind weiterhin übliche Stromversorgungsmittel 14, ein Mikrocontroller 16, eine Ausgangsschaltung 18, eine Überwachungseinheit 20, eine LED-Anzeige H1 und ein Quittiertaster S1 angeordnet. Die elektronischen Komponenten sind auf einer Leiterplatte oder auf zwei miteinander verbundenen Leiterplatten befestigt. Der Quittiertaster S1 ist als DIP-Schalter ausgeführt. Über ein Paar erster Anschlussklemmen 26 wird eine Eingangsspannung Ve zugeführt, die durch die Stromversorgungsmittel 14 in ein positives erstes Versorgungspotential Vbb und in ein demgegenüber niedrigeres, positives zweites Versorgungspotential Vdd gewandelt wird. Die Versorgungspotentiale Vbb und Vdd sind auf des Bezugspotential GND (Massepotential) bezogen. Die Ausgangsschaltung 18 wird über die Überwachungseinheit 20 vom ersten Versorgungspotential Vbb und der Mikrokontroller vom zweiten Versorgungspotential Vdd versorgt.

Um die Einsatzmöglichkeiten des Positionsschalters 2 zu erhöhen, können dem Betätigungsstößel 8 austauschbare Antriebsköpfe vorgesetzt werden. Die Position des Betätigungsstößels 8 wird auf den Schleifer 10 des Potentiometers R1 übertragen. Am Schleifer 10 steht je nach Position des Betätigungsstößels 8 ein unterschiedlich hohes Schleiferpotential Vs an. Das auf das Bezugspotential GND zu beziehend Schleiferpotential Vs wird vom Mikrocontroller 16 in einen digitalen Wert umgewandelt und mit einem gespeicherten Schwellenwert Vr verglichen. Vom Mikrocontroller 16 werden Steuersignale V1 und V2 ausgegeben, deren Potentialpegel davon abhängt, ob der Wert des Schleiferpotentials Vs über oder unter dem Schwellensignal Vr liegt. Durch die Steuersignale V1 und V2 werden in Abhängigkeit der Position des Betätigungsstößels 8 und je nachdem, ob die elektronischen Schaltkontakte N1 und N2 der Ausgangsschaltung 18 für sich genommen als Schließer- oder Öffnerkontakt wirken sollen, die Schaltkontakte N1 und N2 durchgesteuert oder gesperrt. Wenn sich die Position des Betätigungsstößels 8 unterhalb der Umschaltposition befindet oder bewegt, ist der Treiberausgang Q1 oder Q2 im Falle eines Öffnerkontaktes gesperrt, jedoch im Falle eines Schließerkontaktes leitend mit dem ersten Versorgungspotential Vbb verbunden. Wenn sich die Position des Betätigungsstößels 8 dagegen unterhalb der Umschaltposition befindet oder bewegt, ist der entsprechende Treiberausgang Q1 oder Q2 im Falle eines Öffnerkontaktes leitend mit dem ersten Versorgungspotential Vbb verbunden, jedoch im Falle eines Schließerkontaktes gesperrt. Die Treiberausgänge Q1 und Q2 sind mit einem Paar zweiter Anschlussklemmen 28 verbunden, an die von dem Positionsschalter 2 anzusteuernde elektrische und/oder elektronische Einrichtungen angeschlossen werden.

Bei der Erfassung des Schleiferpotentials Vs wird an die beiden Außenanschlüsse 34 und 36 des Potentiometers R1 eine Außenspannung Va gelegt, die vom Mikrocontroller 16 geliefert wird, wobei der erste Außenanschluss 34 abwechselnd positiv und negativ gegenüber dem zweiten Außenanschluss 36 gepolt ist. Im Wechsel wird vom Mikrocontroller 16 an den ersten Außenanschluss 32 das zweite Versorgungspotential Vdd und an den zweiten Außenanschluss 36 das Bezugspotential GND bzw. an den ersten Außenanschluss 32 das Bezugspotential GND und an den zweiten Außenanschluss 36 das zweite Versorgungspotential Vdd angelegt. Damit ergibt sich als Betrag der Außenspannung Va die Differenz zwischen zweiter Versorgungsspannung Vdd und Bezugspotential GND.

Der mit dem Mikrocontroller 16 verbundene Quittiertaster S1 dient dazu, eine gewünschte Umschaltposition der Betätigungsstößels 8 als neuen Umschaltpunkt des Positionsschalters 2 einzustellen, indem durch Betätigen des Quittiertasters S1 das zugehörige Schleiferpotential Vs als neuer maßgeblicher Schwellenwert Vr in den Mikrocontroller 16 übernommen wird. Der Mikrocontroller 16 gibt bei bestimmten Betriebszuständen unterschiedliche Signale an die LED-Anzeige H1 ab, um Fehler, Bestätigungen und bestimmte Zustände durch Leuchten oder Blinken mit unterschiedlicher Blinkfrequenz zu signalisieren. Die Überwachungseinheit 20 dient zur Überwachung der Funktionsfähigkeit des Mikrocontrollers 16 und enthält eine an sich bekannte Watchdog-Schaltung. Beim Feststellen von Fehlfunktionen oder Ausfällen wird durch den Mikrocontroller 16 ein ausgangsseitiges Steuersignal V3 in der Weise geändert, dass über die Überwachungseinheit 20 die Ausgangsschaltung 18 deaktiviert wird, sodass es zu keinen fehlerhaften Reaktionen bei den an den Positionsschalter 2 angeschlossenen Einrichtungen kommen kann.

Der Schleifer 10 des Potentiometers R1 greift mit einem Stift 38 in ein Langloch 40 des Betätigungsstößels 8. Das mechanische Spiel zwischen dem Betätigungsstößel 8 und dem Schleifer 10 beträgt in diesem Beispiel etwa 10 % vom Gesamthub W des Betätigungsstößels 8. Das Schleiferpotential Vs ist somit gegenüber der Position des Betätigungsstößels 8 mit einer mechanisch bewirkten Hysterese versehen. Damit wird verhindert, dass zufällige kleine Änderungen der Position des Betätigungsstößels 8, die beispielsweise durch mechanische Schwingungen einer Maschine verursacht werden können, zum Umschalten der Schaltkontakte N1 und N2 führen.

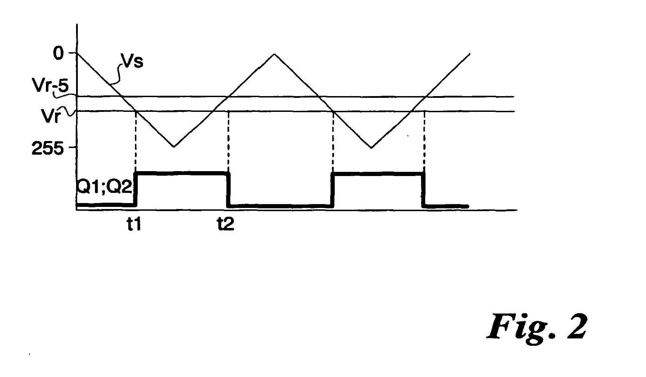

Das Schleiferpotential Vs wird im Mikrocontroller 16 in diesem Beispiel mittels eines 8-Bit-A/D-Wandlers in einen digitalen Wert umgewandelt. Beim Vergleich des digitalen Wertes des Schleiferpotentials Vs, das digitale Werte zwischen 0 und 255 annehmen kann, mit dem Schwellenwert Vr wird zusätzlich eine digitale Hysterese von beispielhaft 5 Digits berücksichtigt, wie es in Fig. 2 gezeigt ist. Ein zunehmendes Schleiferpotential Vs führt beim Überschreiten des Schwellenwertes Vr zu einer Zustandänderung der Treiberausgänge Q1, Q2 (Umschaltzeitpunkt t1). Ein abnehmendes Schleiferpotential Vr führt dagegen erst dann zu einer Umschaltung der Treiberausgänge Q1 und Q2, wenn der Schwellenwert um mehr als 5 Digits unterschritten wurde (Umschaltzeitpunkt t2). Die Hysterese von 5 Digits bezogen auf den Wertebereich von 255 ergibt eine relative Hysterese von ziemlich genau 2 %. Diese zusätzlich zu der vorhandenen mechanischen Hysterese eingeführte digitale Hysterese verhindert störende Zustandsänderungen an den Treiberausgängen Q1, Q2 infolge von zufälligen kleinen elektrischen Änderungen, insbesondere von kleinen Schwankungen des zweiten Versorgungspotentials Vdd oder von eingefangenen Störspannungen.

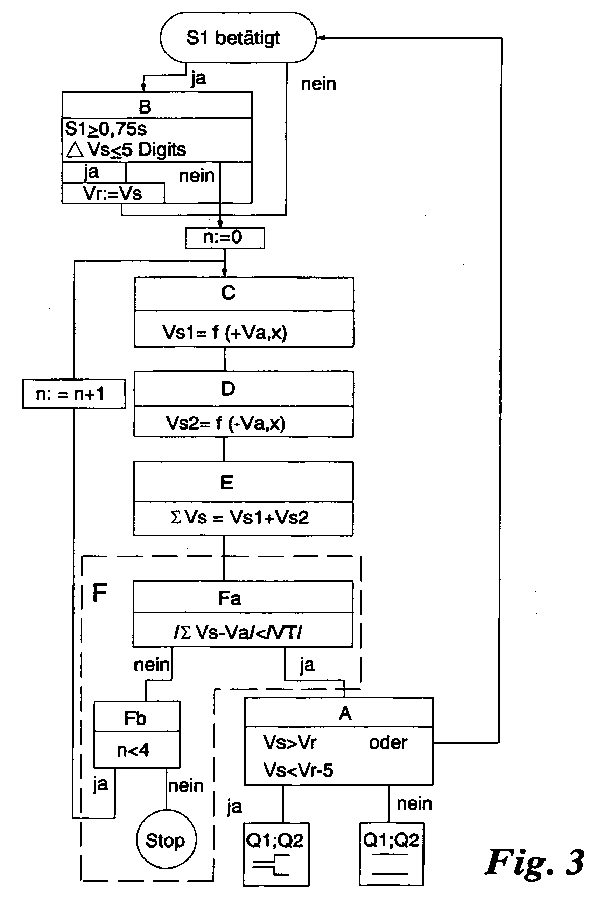

Zur Erläuterung des erfindungsgemäßen Verfahrens zum Betreiben des elektronisch-mechanischen Positionsschalters 2 gemäß Fig. 1 wird im Folgenden auf Fig. 3 Bezug genommen.

Zu Beginn des Verfahrenszyklus wird vom Mikrocontroller 12 abgefragt, ob der Quittierschalter S1 betätigt ist oder nicht. Bei unbetätigtem Quittierschalter S1 folgt die Abfrage nach der aktuellen Position des Betätigungsstößels 8 und der nachfolgenden Bewertung gegenüber der festgelegten Umschaltposition. Zuerst wird im Mikrocontroller 16 der Zählerstand n eines internen Zählers auf Null gesetzt.

Danach wird in einem Verfahrensschritt C die Außenspannung Va an das Potentiometer R1 angelegt, d.h. mit zweitem Versorgungspotential Vdd am ersten Außenanschluss 34 und mit Bezugspotential GND am zweiten Außenanschluss 36. Als Schleiferpotential wird bei einer beliebigen Schleiferposition x ein Wert Vs1 vom Mikrocontroller 16 erfasst. Unmittelbar darauf wird in einem Verfahrensschritt D die Außenspannung Va am Potentiometer R1 umgepolt, d.h. mit Bezugspotential GND am ersten Außenanschluss 34 und mit zweitem Versorgungspotential Vdd am zweiten Außenanschluss 36. Als Schleiferpotential wird bei der noch gleichen Schleiferposition x ein Wert Vs2 vom Mikrocontroller 16 erfasst. In einem folgenden Verfahrensschritt E wird aus den in den beiden vorangehenden Verfahrensschritten C und D ermittelten Werten Vs1 und Vs2 der Summenwert ∑Vs = Vs1 + Vs2 gebildet.

Im einem darauf folgenden Verfahrensschritt F wird der Summenwert mit der Außenspannung Va verglichen. Bei intaktem Potentiometer R1 beträgt in der Schleiferposition x der im Verfahrensschritt D ermittelte Wert des Schleiferpotentials theoretisch Vs2 = Va - Vs1, das heißt, der Summenwert müsste theoretisch gleich der Außenspannung Va sein. Unter Berücksichtigung systembedingter Toleranzen wird allerdings auf die Nähe zur Gleichheit abgestellt. Gemäß einem ersten Teilschritt Fa wird zwischen dem Summenwert ∑Vs und der Außenspannung Va eine zulässig positive oder negative Abweichung festgestellt, die sich innerhalb eines Toleranzfensters VT befindet, das heißt, es ist |∑Vs - Va| < |VT|. Dies gilt als Hinweis für eine fehlerfreie Funktion des Potentiometers R1. Wird dagegen in der Schleiferposition x im Verfahrensschritt D ein Wert für das Schleiferpotential von Vs2 ermittelt, der in erheblichem Maße von Va - Vs1 abweicht, dann wird gemäß einem alternativen, zweiten Teilschritt Fb zwischen dem Summenwert ΣVs und der Außenspannung Va eine unzulässig positive oder negative Abweichung festgestellt, die sich außerhalb des Toleranzfensters VT befindet, das heißt, es ist |∑Vs - Va| >= |VT|. Dies gilt als Hinweis für eine Fehlfunktion des Potentiometers R1. Wird vorzugsweise als Toleranzfenster VT ein digitaler Bereich von ±7 Digits gewählt, dann entspricht das mit einer 8-Bit-A/D-Wandlung einer auf den Gesamthub W des Betätigungsstößels 8 bezogenen relativen Abweichung von etwa ±5 %.

Wird gemäß Teilschritt Fa lediglich eine Abweichung in den zulässigen Grenzen des Toleranzfensters VT festgestellt, erfolgt gemäß einem Verfahrensschritt A die Bewertung des gültigen Schleiferpotentials Vs gegenüber dem Schwellenwert Vr, wobei hier die digitale Hysterese von 5 Digits berücksichtigt wird. Wenn der Wert des Schleiferpotentials Vs den Schwellenwert Vs überschritten oder den Schwellenwert Vs minus 5 Digits unterschritten hat, werden vom Mikrocontroller 16 durch Ausgabe über die Steuersignale V1, V2 die Zustände der Treiberausgänge Q1, Q2 umgekehrt. Im anderen Falle bleiben die Zustände der Treiberausgänge Q1, Q2 erhalten. Nach der Bewertung des gültigen Schleiferpotentials Vs nach Verfahrensschritt A erfolgt erneut die Abfrage nach dem Zustand des Quittiertasters S1. Bei unbetätigtem Quittierschalter S1 folgen wiederum die Verfahrenschritte C bis F.

Wenn gemäß Teilschritt Fb eine Abweichung außerhalb des Toleranzfensters VT festgestellt wird, dann wird zunächst der Zählerstand n des internen Zählers abgefragt, der sich bei der ersten Feststellung einer Ungleichheit noch auf dem Stand Null befindet. Nach einer Erhöhung des Zählerstandes n um Eins, werden erneut die Verfahrensschritte C bis F durchlaufen. Sollte jetzt eine zulässige Abweichung gemäß dem Teilschritt Fa festgestellt werden, dann ist davon auszugehen, dass die bei dem vorherigen Durchlauf festgestellte unzulässig große Abweichung zufällig war, sodass die Bewertung des Schleiferpotentials Vs gemäß Verfahrensschritt A folgt. Sollte allerdings wiederum eine unzulässig große Abweichung gemäß dem Teilschritt Fb festgestellt werden, dann werden unter erneuter Erhöhung des Zählerstandes n um Eins die Verfahrenschritte C bis F nochmals durchlaufen. Bei wiederholter Feststellung einer unzulässig großen Abweichung gemäß Teilschritt Fb erfolgt unter Hinaufsetzung des Zählerstandes die Wiederholung der Verfahrensschritte C bis F erneut. Die vom Teilschritt Fb ausgehende Wiederholung der Verfahrensschritte C bis F kann bis zu viermal erfolgen. Wird unter jeweiliger Abfrage des Zählerstandes n nach vier Wiederholungen jedes Mal eine unzulässig große Abweichung zwischen dem Summenwert ∑Vs und dem Wert der Außenspannung Va außerhalb des Toleranzfensters VT festgestellt, ist diese Abweichung nicht mehr zufällig. Als Folge wird keine weitere Wiederholung der Prüfung des Schleiferpotentials Vs durchgeführt, dagegen unterbleibt die Bewertung des Schleiferpotentials Vs. Vom Mikrocontroller 16 wird ein Fehlermeldesignal zum periodisch langsamen Blinken an die LED-Anzeige H1 gesendet. Gleichzeitig werden vom Mikrocontroller 16 die Steuersignale V1 und V2 so gesetzt, dass die elektronischen Kontakte N1 und N2 zwangsweise offen gehalten werden.

Wird im Laufe des Verfahrenszyklus vom Mikrocontroller 16 erkannt, dass der Quittiertaster S1 betätigt ist, wird erwartet, dass eine neuer Umschaltpunkt des Positionsschalters 2, damit eine neue Umschaltposition des Betätigungsstößels 8 und ein dieser entsprechender neuer Schwellenwert Vr gespeichert werden soll. Gemäß einem Verfahrensschritt B wird vom Mikrocontroller 16 überprüft, ob während einer Mindestbetätigungsdauer für den Quittiertaster S1 von beispielhaft 0,75 s sich der Wert des Schleiferpotentials Vs nicht außerhalb der digitalen Hysterese von 5 Digits bewegt. Sollte dies der Fall sein, dann wird der Wert des Schleiferpotentials Vs ignoriert. Im anderen Falle wird der in der gewünschten Umschaltposition ermittelte Wert des Schleiferpotentials Vs als der für die Folgezeit beim Verfahrensschritt A maßgebliche Schwellenwert Vr übernommen und gespeichert. Bei der erfolgreichen Übernahme eines neuen Schwellenwertes Vr wird vom Mikrocontroller 16 ein Bestätigungssignal zum periodisch schnellen Blinken an die LED-Anzeige H1 geliefert. Bei der Einstellung der neuen Umschaltposition ist wie bei üblichen elektromechanischen Positionsschaltern die Anfahrrichtung des Betätigungsstößels 8 aufgrund der mechanischen Hysterese zu beachten.

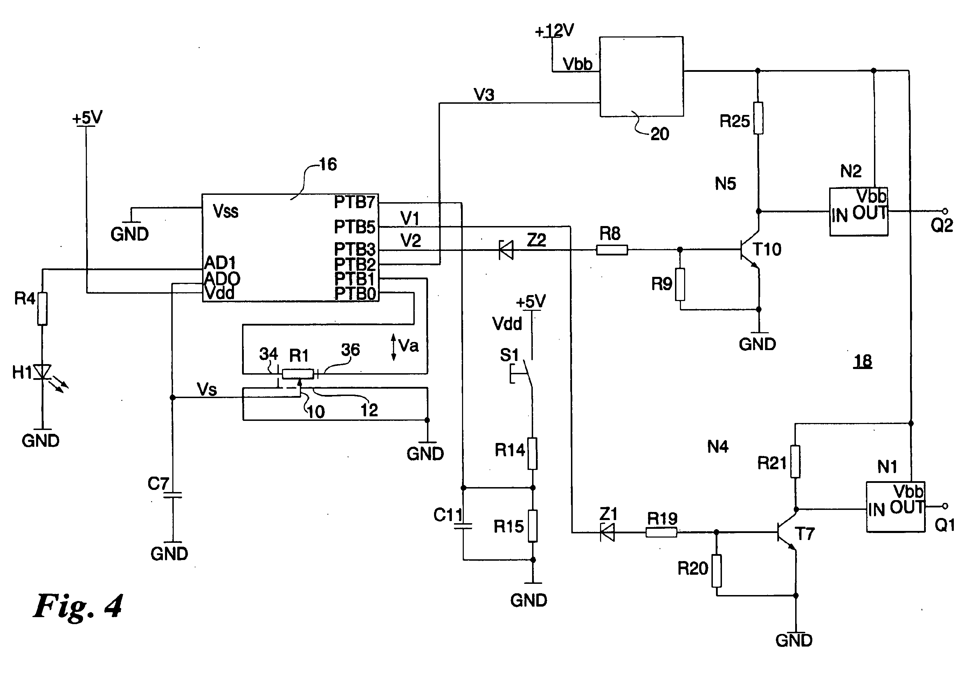

Fig. 4 zeigt eine Schaltungsanordnung mit denjenigen Einzelheiten des Positionsschalters 2, die für die Durchführung des erfindungsgemäßen Verfahrens von Bedeutung sind. Im Beispiel werden für den Mikrocontroller 16 ein handelsüblicher Mikrocontroller mit der Typenbezeichnung M68HC908QY4 der Firma Motorola Inc. und für die elektronischen Schaltkontakte N1, N2 handelsübliche Schaltkreise mit der Typenbezeichnung BTS 4140 N, die einen vertikalen N-Kanal-Leistungs-MOSFET enthalten und von der Infineon Technologies AG angeboten werden, verwendet.

Dem Mikrocontroller 16 wird an seinen Anschlüssen Vss und Vdd das Bezugspotential GND bzw. das zweite Versorgungspotential in Höhe von +5 V gegenüber Bezugspotential GND zugeführt. Die Außenanschlüsse 34, 36 des Potentiometers R1 sind mit der Außenspannung Va beaufschlagt, die über die Ausgänge PTB0 und PTB1 vom Mikrocontroller 16 mit wechselnder Polung ausgegeben wird. Vom Schleifer 10 wird die Schleiferspannung Vs an einen Analogeingang AD0 des Mikrocontrollers 16 geführt. Durch einen Entstörkondensator C7 und eine Schirmung 12 nach Bezugspotential GRD ist die Schleiferspannung Vs weitgehend entstört. Der Quittiertaster S1 verbindet das zweite Versorgungspotential Vdd mit einem gegen das Bezugspotential GND führenden Spannungsteiler R14, R15, dessen über einen weiteren Entstörkondensator C11 entstörter Teilungspunkt mit einem Eingang PTB7 des Mikrocontrollers 16 verbunden ist. Die an den Steuerausgängen PTB5, PTB3 des Mikrocontrollers 16 ausgegebenen Steuersignale V1, V2 steuern die Ausgangsschaltung 18. Die Ausgangsschaltung 18 besteht aus den elektronischen Schaltkontakten N1 und N2 sowie aus diesen vorgeschalteten Schwellwertschaltem N4 und N5. Die Schwellwertschalter N4 und N5 sind mit je einem NPN-Transistor T7 bzw. T10 in Emitterschaltung versehen. Dem Transistor T7 bzw. T10 ist eine Z-Diode Z1 bzw. Z2 und ein Spannungsteiler R19, R20 bzw. R8, R9 vorgeschaltet. Kollektorseitig ist der Transistor T7 bzw. T10 mit einem Arbeitswiderstand R21 bzw. R25 und dem Eingang IN des Schaltkontaktes N1 bzw. N2 verbunden. Der Ausgang OUT des Schaltkontaktes N1 bzw. N2 bildet den Treiberausgang Q1 bzw. Q2 des Positionsschalters 2 zur Ansteuerung elektrischer Einrichtungen. Die Ausgangsschaltung 18 wird über die Überwachungseinheit 20 mit dem ersten Versorgungspotential Vbb in Höhe von beispielhaft +12 V beliefert. Im Falle erkannter Fehlfunktionen oder Ausfälle steuert das an einem Ausgang PTB2 des Mikrocontrollers 16 ausgegebene Steuersignal V3 die Überwachungseinheit 20 in der Weise, dass die Ausgangsschaltung 18 vom ersten Versorgungspotential Vbb getrennt und damit deaktiviert wird. Von einem Ausgang AD1 werden bei gegeben Anlässen über einen Begrenzungswiderstand R4 Fehlermelde- oder Bestätigungssignale an die LED-Anzeige H1 geliefert.

### Bezugszeichenliste:

- 2: Positionsschalter
- 4: Gehäuse
- 6: Druckfeder
- 8: Betätigungsstößel
- 10: Schleifer
- 12: Schirmung
- 14: Stromversorgungsmittel
- 16: Mikrocontroller
- 18: Ausgangsschaltung
- 20: Überwachungseinheit
- 26; 28: Anschlussklemmen
- 34; 36: Außenanschlüsse
- 38: Stift
- 40: Langloch

- A ... F: Verfahrensschritte
- Cx: Kondensatoren
- Fa; Fb: Teilschritte
- GND: Bezugspotential
- H1: LED-Anzeige
- n: Zählerstand
- N1; N2: Schaltkontakte
- N4; N5: Schwellwertschalter
- Q1; Q2: Treiberausgang
- R1: Potentiometer
- Rx: Widerstände
- S1: Quittiertaster
- t1; t2: Umschaltzeitpunkte
- T7; T10: Transistoren
- V1; V2; V3: Steuersignale
- Va: Außenspannung
- Vbb; Vdd: Versorgungspotentiale
- Ve: Eingangsspannung
- Vr: Schwellenwert
- Vs; Vs1; Vs2: Schleiferpotential
- VT: Toleranzfenster
- W: Gesamthub
- x: Schleiferposition
- Y: Betätigungsrichtung
- Z1; Z2: Z-Dioden
- ∑Vs: Summenwert

## Patentansprüche

1. Verfahren zum Betreiben eines elektronisch-mechanischen Positionsschalters (2), enthaltend ein Gehäuse (4), einen Betätigungsstößel (8), ein vom diesem beaufschlagtes Potentiometer (R1), einen Mikrocontroller (16), mindestens einen elektronischen Schaltkontakt (N1; N2), Stromversorgungsmittel (14) und Anschlussklemmen (26; 28), wobei
A) durch den Mikrocontroller (16) ein der jeweiligen Position des Betätigungsstößels (8) entsprechendes, am Schleifer (10) des Potentiometers (R1) anstehendes Schleiferpotential (Vs) erfasst, gegenüber einem einer Umschaltposition des Betätigungsstößels (8) entsprechendes, gespeicherten Schwellenwert (Vr) bewertet und je nach Über- oder Unterschreiten des Schwellenwertes (Vr) durch das Schleiferpotential (Vs) der mindestens eine Schaltkontakt (N1; N2) aktiviert bzw. deaktiviert wird,
**gekennzeichnet durch** folgende Verfahrensschritte:
B) in der einzurichtenden Umschaltposition des Betätigungsstößel (8) wird der Wert des Schleiferpotentials (Vs) **durch** Betätigen eines Quittiertasters (S1) als Schwellenwert (Vr) in den Mikrocontroller (16) übernommen,
C) nachfolgend wird in der jeweiligen Position des Betätigungsstößels (8) ein erster Wert (Vs1) des Schleiferpotentials (Vs) vom Mikrocontroller (16) erfasst, währenddem die Außenanschlüsse (34, 36) des Potentiometers (R1) vom Mikrocontroller (16) mit einer Außenspannung (Va) beaufschlagt sind,
D) unmittelbar darauf wird ein zweiter Wert (Vs2) des Schleiferpotentials (Vs) erfasst, währenddem die Außenanschlüsse (34, 36) vom Mikrocontroller (16) gegenüber Verfahrensschritt C mit verpolter Außenspannung (Va) beaufschlagt sind,
E) worauf aus dem erstem Wert (Vs1) und dem zweiten Wert (Vs2) ein Summenwert (ΣVs) gebildet wird,
F) wird beim Vergleich des Summenwertes (ΣVs) mit dem Wert der Außenspannung (Va)
Fa) lediglich ein Unterschied innerhalb eines festgelegten Toleranzfensters (VT) festgestellt, folgt Verfahrensschritt A und daraufhin Verfahrensschritt C, bei betätigtem Quittiertaster (S1) hingegen Verfahrensschritt B,
Fb) hingegen ein Unterschied außerhalb des Toleranzfensters (VT) festgestellt, wird eine Bewertung des Schleiferpotentials (Vs) unterlassen.

2. Verfahren nach vorstehendem Anspruch, **dadurch gekennzeichnet, dass** die Außenspannung (Va) aus dem Versorgungspotential (Vdd) und dem Bezugspotential (GND) des Mikrocontrollers (16) gebildet wird.

3. Verfahren nach einem der vorstehenden Ansprüche, **dadurch gekennzeichnet, dass** ausgehend von dem Teilschritt Fb die Verfahrensschritte B bis F wiederholt werden, bis zu einer vorgegebenen Anzahl von Wiederholungen lediglich ein Unterschied innerhalb des Toleranzfensters (VT) festgestellt und weiter nach Teilschritt Fa verfahren wird oder weiterhin ein Unterschied außerhalb des Toleranzfensters (VT) besteht und eine Bewertung des Schleiferpotentials (Vs) unterbleibt.

4. Verfahren nach vorstehendem Anspruch, **dadurch gekennzeichnet, dass** bis zu vier Wiederholungen stattfinden.

5. Verfahren nach einem der vorstehenden Ansprüche, **dadurch gekennzeichnet, dass** das Toleranzfenster (VT) einem Bereich von ±2 % bis ±10 % des Gesamthubes (W) des Betätigungsstößels (8) entspricht.

6. Verfahren nach einem der vorstehenden Ansprüche, **dadurch gekennzeichnet, dass** der Mikrocontroller (16) bei unterbliebener Bewertung des Schleiferpotentials (Vs) ein Fehlermeldesignal ausgibt.

7. Verfahren nach einem der vorstehenden Ansprüche, **dadurch gekennzeichnet, dass** das Schleiferpotential (Vs) gegenüber der Position des Betätigungsstößels (8) mit einer mechanischen Hysterese versehen ist.

8. Verfahren nach vorstehendem Anspruch, **dadurch gekennzeichnet, dass** die mechanische Hysterese ein Zehntel des Gesamthubes (W) des Betätigungsstößels (8) beträgt.

9. Verfahren nach einem der beiden vorstehenden Ansprüche, **gekennzeichnet durch** ein mechanisches Spiel zwischen dem Betätigungsstößel (8) und dem Potentiometer (R1).

10. Verfahren nach einem der vorstehenden Ansprüche, **dadurch gekennzeichnet, dass** der durch den Mikrocontroller (16) digitalisierte Wert des Schleiferpotentials (Vs) mit einer digitalen Hysterese beaufschlagt ist.

11. Verfahren nach vorstehendem Anspruch, **dadurch gekennzeichnet, dass** die digitale Hysterese 2 % vom Wertes der Außenspannung (Va) beträgt.

12. Verfahren nach einem der beiden vorstehenden Ansprüche, **dadurch gekennzeichnet, dass** bei dem Verfahrensschritt B während einer mindestens für eine Mindestbetätigungsdauer anhaltenden Betätigung des Quittiertasters (S1) geprüft wird, ob der Wert des digitalisierten Schleiferpotentials (Vs) innerhalb der digitalen Hysterese verblieben ist, und nur bei erfolgreicher Prüfung die Übernahme des neuen Schwellenwertes (Vr) erfolgt.

13. Verfahren nach vorstehendem Anspruch, **dadurch gekennzeichnet, dass** die Mindestbetätigungsdauer 0,5 bis 1 s beträgt.

14. Verfahren nach einem der beiden vorstehenden Ansprüche, **dadurch gekennzeichnet, dass** der Mikrocontroller (16) nach erfolgreicher Übernahme des neuen Schwellenwertes (Vr) ein Bestätigungssignal ausgibt.

## Claims

1. A method of operating an electronic-mechanical position switch (2), comprising a housing (4), an actuating plunger (8), a potentiometer (R1) acted upon by the latter, a microcontroller (16), at least one electronic switching contact (N1; N2), power supply means (14) and terminals (26; 28),
A) the microcontroller (16) detecting a wiper potential (Vs) corresponding to the respective position of the actuating plunger (8) and present at the wiper (10) of the potentiometer (R1), evaluating it relative to a stored threshold value (Vr) corresponding to a changeover position of the actuating plunger (8), and activating or deactivating the at least one switching contact (N1; N2) depending on whether the wiper potential (Vs) exceeds or falls below the threshold value (Vr),
**characterised by** the following method steps:
B) in the changeover position to be set of the actuating plunger (8) the value of the wiper potential (Vs) is accepted into the microcontroller (16) as threshold value (Vr) by actuation of an acknowledge button (S1),
C) then in the respective position of the actuating plunger (8) a first value (Vs1) of the wiper potential (Vs) is detected by the microcontroller (16), while the external connections (34, 36) of the potentiometer (R1) are supplied with an external voltage (Va) by the microcontroller (16),
D) immediately thereafter a second value (Vs2) of the wiper potential (Vs) is detected, while the external connections (34, 36) are supplied by the microcontroller (16) with external voltage of reverse polarity relative to method step C,
E) whereupon a cumulative value (•Vs) is formed from the first value (Vs1) and the second value (Vs2),
F) if on comparison of the cumulative value (•Vs) with the value of the external voltage (Va)
Fa) only a difference within a fixed tolerance window (VT) is identified, method step A follows and thereupon method step C, or on the other hand in the case of an actuated acknowledge button (S1) method step B,
Fb) if on the other hand a difference outside the tolerance window (VT) is identified, assessment of the wiper potential (Vs) is omitted.

2. A method according to the preceding claim, **characterised in that** the external voltage (Va) is formed from the supply potential (Vdd) and the reference potential (GND) of the microcontroller (16).

3. A method according to either one of the preceding claims, **characterised in that** starting from sub-step Fb method steps B to F are repeated, up to a predetermined number of repeats only a difference within the tolerance window (VT) is identified and the procedure is continued according to sub-step Fa or there continues to be a difference outside the tolerance window (VT) and assessment of the wiper potential (Vs) is omitted.

4. A method according to the preceding claim, **characterised in that** up to four repeats take place.

5. A method according to any one of the preceding claims, **characterised in that** the tolerance window (VT) corresponds to a range of ±2 % to ±10 % of the total stroke (W) of the actuating plunger (8).

6. A method according to any one of the preceding claims, **characterised in that** the microcontroller (16) outputs an error notification signal in the absence of assessment of the wiper potential (Vs).

7. A method according to any one of the preceding claims, **characterised in that** the wiper potential (Vs) is provided with mechanical hysteresis relative to the position of the actuating plunger (8).

8. A method according to the preceding claim, **characterised in that** the mechanical hysteresis amounts to one tenth of the total stroke (W) of the actuating plunger (8).

9. A method according to either one of the preceding two claims, **characterised by** mechanical play between the actuating plunger (8) and the potentiometer (R1).

10. A method according to any one of the preceding claims, **characterised in that** the value of the wiper potential (Vs), digitised by the microcontroller (16), is acted on with digital hysteresis.

11. A method according to the preceding claim, **characterised in that** the digital hysteresis amounts to 2% of the value of the external voltage (Va).

12. A method according to either one of the preceding two claims, **characterised in that** in method step B it is checked, during actuation of the acknowledge button (S1) continuing at least for a minimum actuation period, whether the value of the digitised wiper potential (Vs) has remained within the digital hysteresis and only if this check is successful does acceptance of the new threshold value (Vr) occur.

13. A method according to the preceding claim, **characterised in that** the minimum actuation period is 0.5 to 1 s.

14. A method according to either one of the preceding two claims, **characterised in that** the microcontroller (16) outputs an actuation signal on successful acceptance of the new threshold value (Vr).

## Revendications

1. Procédé pour actionner un interrupteur de position électronique-mécanique (2) comprenant un boîtier (4), un coulisseau d'actionnement (8), un potentiomètre (R1) sollicité par celui-ci, un micro-contrôleur(16), au moins un contact de commutation électronique (N1; N2), des moyens d'alimentation en courant (14) et des bornes de raccordement (26; 28),
A) le micro-contrôleur (16) détectant un potentiel de curseur (Vs) appliqué au curseur (10) du potentiomètre (R1) correspondant à la position respective du coulisseau d'actionnement (8), évaluant ce potentiel par rapport à une valeur seuil (Vr) enregistrée correspondant à une position de commutation du coulisseau d'actionnement (8) et activant resp. désactivant le au moins un contact de commutation (N1; N2) selon que le potentiel de curseur (Vs) dépasse la valeur seuil (Vr) ou passe en-dessous,
**caractérisé par** les étapes de procédé suivantes:
B) dans la position de commutation du coulisseau d'actionnement (8) qui est à régler, la valeur du potentiel de curseur (Vs) est adoptée comme valeur seuil (Vr) dans le micro-contrôleur (16) suite à l'actionnement d'une touche d'acquittement (S1),
C) une première valeur (Vs1) du potentiel de curseur (Vs) est ensuite détectée par le micro-contrôleur (16) dans la position respective du coulisseau d'actionnement (8), cependant que le micro-contrôleur (16) applique une tension externe (Va) aux raccordements externes (34, 36) du potentiomètre (R1),
D) immédiatement après, une seconde valeur (Vs2) du potentiel de curseur (Vs) est détectée, cependant que le micro-contrôleur (16) applique aux raccordements externes (34, 36) une tension externe à polarité inversée (Va) par rapport à l'étape C du procédé,
E) après quoi une valeur de somme (ΣVs) est formée à partir de la première valeur (Vs1) et de la seconde valeur (Vs2),
F) si, lors de la comparaison de la valeur de somme (ΣVs) avec la valeur de la tension externe (Va),
Fa) on constate seulement une différence à l'intérieur d'une fenêtre de tolérance (VT) déterminée, il s'ensuit l'étape A du procédé, suivie de l'étape C du procédé, mais de l'étape B du procédé si la touche d'acquittement (S1) est actionnée,
Fb) on constate au contraire une différence à l'extérieur de la fenêtre de tolérance (VT), le potentiel de curseur (Vs) n'est pas évalué.

2. Procédé selon la revendication précédente, **caractérisé par le fait que** la tension externe (Va) est formée à partir du potentiel d'alimentation (Vdd) et du potentiel de référence (GND) du micro-contrôleur (16).

3. Procédé selon l'une des revendications précédentes, **caractérisé par le fait qu'**à partir de l'étape partielle Fb, les étapes B à F du procédé sont répétées jusqu'à ce que, après un nombre prédéfini de répétitions, seule une différence à l'intérieur de la fenêtre de tolérance (VT) soit constatée et la procédure se poursuit d'après l'étape partielle Fa, ou alors une différence à l'extérieur de la fenêtre de tolérance (VT) existe toujours et aucune évaluation du potentiel de curseur (Vs) n'a lieu.

4. Procédé selon la revendication précédente, **caractérisé par le fait qu'**il se produit jusqu'à quatre répétitions.

5. Procédé selon l'une des revendications précédentes, **caractérisé par le fait que** la fenêtre de tolérance (VT) correspond à un intervalle compris entre ±2% et ±10% de la course totale (W) du coulisseau d'actionnement (8).

6. Procédé selon l'une des revendications précédentes, **caractérisé par le fait que** le micro-contrôleur (16) émet un signal de signalisation d'erreur en cas d'absence d'évaluation du potentiel de curseur (Vs).

7. Procédé selon l'une des revendications précédentes, **caractérisé par le fait que** le potentiel de curseur (Vs) présente une hystérésis mécanique par rapport à la position du coulisseau d'actionnement (8).

8. Procédé selon la revendication précédente, **caractérisé par le fait que** l'hystérésis mécanique représente un dixième de la course totale (W) du coulisseau d'actionnement (8).

9. Procédé selon l'une des deux revendications précédentes, **caractérisé par** un jeu mécanique entre le coulisseau d'actionnement (8) et le potentiomètre (R1).

10. Procédé selon l'une des revendications précédentes, **caractérisé par le fait qu'**une hystérésis numérique est appliquée à la valeur du potentiel de curseur (Vs) numérisée par le micro-contrôleur (16).

11. Procédé selon la revendication précédente, **caractérisé par le fait que** l'hystérésis numérique représente 2% de la valeur de la tension externe (Va).

12. Procédé selon l'une des deux revendications précédentes, **caractérisé par le fait que**, lors de l'étape B du procédé, on vérifie pendant un actionnement de la touche d'acquittement (S1) d'une durée au moins égale à une durée d'actionnement minimale, si la valeur du potentiel de curseur numérisé (Vs) est restée à l'intérieur de l'hystérésis numérique et la nouvelle valeur seuil (Vr) n'est adoptée qu'en cas de succès de la vérification.

13. Procédé selon la revendication précédente, **caractérisé par le fait que** la durée d'actionnement minimale est comprise entre 0,5 s et 1 s.

14. Procédé selon l'une des deux revendications précédentes, **caractérisé par le fait que** le micro-contrôleur (16) émet un signal d'actionnement après que la nouvelle valeur seuil (Vr) a été adoptée avec succès.
